# EUROPEAN PATENT SPECIFICATION

(11) **EP 1 233 006 B1**
(45) Date of publication and mention of the grant of the patent: **05.10.2005**
(21) Application number: 02003209.0
(22) Date of filing: 19.02.2002
(51) Int. Cl.: C03B 37/014

(54) **Method of forming a porous glass preform by vapour phase deposition**
Verfahren zum Herstellen einer Vorform aus porösem Glas durch Abscheidung aus der Dampfphase
Procédé de fabrication d'une préforme en verre poreux par dépôt en phase vapeur

(30) Priority: 19.02.2001 JP 2001041420
(43) Date of publication of application: 21.08.2002
(73) Proprietor: Sumitomo Electric Industries, Ltd., Osaka 541 (JP)
(72) Inventor: Enomoto, Tadashi, 1, Taya-cho, Yokohama-shi, Kanagawa (JP); Ohga, Yuichi, 1, Taya-cho, Yokohama-shi, Kanagawa (JP); Akaike, Nobuya, 1, Taya-cho, Yokohama-shi, Kanagawa (JP); Aikawa, Haruhiko, 1, Taya-cho, Yokohama-shi, Kanagawa (JP)
(74) Representative: HOFFMANN EITLE

(56) References cited:
- PATENT ABSTRACTS OF JAPAN vol. 013, no. 056 (C-566), 8 February 1989 (1989-02-08) & JP 63 248734 A (HITACHI CABLE LTD), 17 October 1988 (1988-10-17)
- PATENT ABSTRACTS OF JAPAN vol. 1998, no. 12, 31 October 1998 (1998-10-31) & JP 10 194769 A (SUMITOMO ELECTRIC IND LTD), 28 July 1998 (1998-07-28)

## Description

### BACKGROUND OF THE INVENTION

### FIELD OF THE INVENTION

The present invention relates to an improved method of forming a pure silica soot preform on a starting rod at a high yield rate and a high deposition rate by using a VAD method (Vapour-phase axial deposition method) to thereby produce an optical fiber preform.

### DESCRIPTION OF THE RELATED ART

A silica glass of high purity, particularly a silica glass article which is used for an optical fiber preform is produced by a so-called vapour-phase synthesis method in order to avoid mixing metallic impurities therein. Namely, a liquid glass material such as SiCl₄ and SiHCl₃ is vaporized and gasified. The gasified glass material is supplied into a flame which is formed with hydrogen or hydrocarbon of high purity as a combustion gas and high purity oxygen as a supporting gas, to thereby form glass particles by flame hydrolysis and oxidation. Then, the glass particles are deposited on a starting rod as a target to form a soot preform. The soot preform is vitrified at a high-temperature furnace, and thereby the silica glass is produced. The VAD method or OVD method (Outside Vapour-phase Deposition method) is generally employed as vapour-phase synthesis method. Hereinafter, the soot preform for producing a silica glass by the VAD method or OVD method consists of the starting rod and the deposited glass particles on the starting rod.

A coaxial multi-tubular burner is generally used as a burner for synthesizing flames. A deposition rate of the soot preform is defined by increment of the weight of the soot preform per unit time. In order to raise the deposition rate of the soot preform, there is used a so-called coaxial multiple flame burner. The multiple flame burner produces first flame and second flame. The first flame for synthesizing the glass particles comprises a raw material gas of glass, a combustion gas and a supporting gas. One or more flame is disposed on the outer periphery of the first flame to heat the surface of the soot preform where deposition takes place.

A protective tube for regulating an expanse of flames and preventing a flutter of the first and second flames due to disturbance is normally provided at the tip of the burner. In this case, for example, it has been proposed to control the expanse of flames by providing the protective tube at a tip of the synthesizing tube for decreasing a crack generation according to decreasing a bulk density difference, which takes place where the soot preform starts to be deposited. The protective tube has an opening end with a regulated diameter thereof. (Japanese patent laid-open No. Hei.5-345621)

When the soot preform, which is formed by the VAD method thickly on the periphery of the glass rod, having a core is dehydrated and vitrified, many fine voids are generated on the interface of the soot preform. In order to avoid generating the voids, there has been proposed a method for forming a soot preform by using a primary burner and a secondary burner. The first layer of the soot preform is formed on the outer periphery of the glass rod of high purity by using the primary burner. The first layer has the diameter twice or less than that of the glass rod. Then, by using the secondary burner, the second layer on the outer periphery of the first layer is formed on the surface of the first layer (Japanese patent laid-open NO. Sho. 63-248734) with the temperature of the interface between the glass rod and the first layer at 900 - 1,000 °C.

In the VAD method, glass particles are been depositing on the outer periphery of a target glass rod consisting of a core or a core and a cladding, while the glass rod is been pulling up.

In the method, a ratio of a diameter c of the soot preform corresponding to the diameter b of the glass rod (which includes the core and the cladding) must be kept constant under the condition that the bulk density of the soot preform is constant, so that the core diameter with respect to the diameter of the finally formed soot preform is constant, since the ratio b/a of a core diameter a to a cladding diameter b of the glass rod is generally constant.

Incidentally, if the diameter of the soot preform becomes large, the deposition rate of the glass particles to the soot preform becomes improved. The deposition efficiency of the glass particles is raising depending on increment of the soot preform diameter. However, in the case that the outer diameter of the soot preform is increased, the adherence of the glass particles to an interface between the glass rod and the soot preform (Hereinafter, referred to as "the interface of the soot preform") and the heating of the interface of the soot preform becomes insufficient because of a limit to the expanse of flames of the burner. Consequently, voids are generated at the time of consolidating the soot preform, and thereby a good transparent silica glass may not be obtained.

Further, there is provided with another method of raising the deposition rate for increasing an amount of the raw gas material. If the amount of the raw material gas is increased, the formed glass particles are increased and thus the soot preform is also thick. However, as the flame for heating a deposition surface of the soot preform remains unchanged, a lack of expanding the flames occurs. Therefore, cracks might be produced in the early stage of forming the soot preform, and the bulk density of the outer layer portion of the soot preform is reduced, thereby the soot preform becomes fragile. If the bulk density of the interface of the soot preform is reduced, a number of voids on the interface of the soot preform (hereinafter, referred to as "the interfacial voids") might be generated in the consolidated optical fiber preform.

In order to prevent the interfacial voids, it is an effective means to increase a quantity of flame by enlarging the diameter of the burner or the diameter of the open end of the protective tube at the step of producing the soot preform. Even though the size of the burner and/or the diameter of the opening end of the burners are increased in the above-mentioned case, the deposition area of the soot preform still remains unchanged. Therefore, the yield rate of the raw material gas is constant, but an absolute waste amount of the glass particles is increased. Moreover, as oxygen gas and hydrogen gas which do not contribute to heat the soot preform are increased, it becomes non-effective as a whole.

Incidentally, in order to enlarge the soot preform without the generation of the interfacial voids, it is effective to introduce a small-sized burner as a primary burner for depositing the glass particles on the glass rod.

However, such a burner does not contribute to improving the deposition rate. Or rather the deposition rate becomes worse, if the glass particles are deposited only in the vicinity of the glass rod. For example, in case that a small-sized burner is used as a primary burner, the diameter of the soot preform formed by the small-sized burner is twice as large as that of the glass rod, the deposition amount of the glass particles deposited by the small-sized burner relative to the whole deposition amount is extremely small. The deposition rate in this case is substantially equal to or slightly increased in a case where only one secondary burner is employed.

Comparing with the case that only one secondary burner is employed, the amount of the raw material gas, combustion gas, and supporting gas is increased owing to adding the small-sized burner. Consequently, the yield rate of the raw material gas becomes less.

### SUMMARY OF THE INVENTION

It is an object of the present invention to provide a method of forming a soot preform such that the deposition of the glass particles may be formed at a high yield rate and a high deposition rate by employing two burners under certain conditions.

The above-object may be accomplished by the two-burners method of the present invention.

In a first aspect of the present invention, a method of forming a soot preform comprising:
forming a primary soot preform on an outer periphery of a glass rod by a primary burner; and
forming a secondary soot preform by a secondary burner on an outer periphery the primary soot preform,
wherein a diameter of the primary soot preform is set to be ranged from twice to five times of a diameter of the glass rod, and a thickness of the secondary soot preform is set to be ranged from 1.5 times to seven times of that of the primary soot preform.

According to the first aspect of the present invention, it may be possible to maximize a performance of the primary burner with respect to that of whole burners.

When the ratio of the diameter of the primary soot preform with respect to the starting rod are smaller than two times, the contribution of the primary burner is less with respect to the whole deposition. When the diameter of the primary soot preform is seven times larger than that of the starting rod, an interference of the flame of the primary burner with that of the secondary burner may be turbulent. Consequently, the deposition efficiency or yield rate of the raw material gas is considerably reduced.

It is preferable that the ratio between the thickness of the primary soot preform and the secondary soot preform is set in range from two times to five times of the thickness of the primary soot preform, so that the deposition rate is particularly improved.

When a diameter of an opening end of the secondary burner is greater than that of the primary burner, a surface of the soot preform heated by the secondary burner is larger than that heated by the primary burner. Consequently, deposition rate of the primary preform and that of the secondary preform becomes better respectively.

Here, the diameter of the burner can be defined by two cases, the diameter of the burner at the tip, or the diameter of a windshield or a protective tube at the tip, if the windshield or the protection or the tube is attached to the burner.

When the diameter of the opening end of the secondary burner is set in range from two times to five times of that of the primary burner, the deposition surface of the soot preform may be heated most efficiently.

When an angle between each axis of the burners and the axis of the glass rod is ranged from 45 to 75 degree, the surface of the soot preform formed by VAD method becomes most stably and the glass particles deposition can be performed at high efficiency.

When a distance between center point of the glass particles deposition area by the primary burner and that by the secondary burners is one third of or greater than the diameter of the soot preform, the deposition by the VAD method is efficiently performed. If a distance between the primary and secondary burner is shorter than the above-mentioned range, the flames formed by the respective burners interfere with each other, and thereby the deposition of the glass particles and the soot preform is not effective.

It is preferable that the distance between center point of the glass particles deposition area by the primary and that by the secondary burners is three times of or smaller than the diameter of the soot preform.

When a supply of a raw material gas to the primary burner is stopped before a supply of the raw material gas to the secondary burner is stopped at a termination end of the soot preform, an excessive portion of the glass particles deposited by the primary burner is curtailed.

After supply to the primary burner is stopped, the secondary burner deposits the glass particles down to the stop line where the glass particles deposition by the primary burner was stopped.

Consequently, the deposition of the glass particles is performed more efficiently without waste of the raw material and thereby the production cost is reduced.

### BRIEF DESCRIPTION OF THE DRAWINGS

Fig. 1A is a schematic vertical sectional view showing a condition in which two burners are used to deposit glass particles according to the invention;
Fig. 1B a partial enlarged view of soot surface where deposition takes place and to which the burner is directed according to the invention;
Fig. 2A is a schematic vertical sectional view showing a condition in which one burner is used to deposit glass particles according to a prior art, and Fig. 2B a partial enlarged view of soot surface where deposition takes place and to which the burner is directed according to the prior art;
Fig. 3 is an exemplary diagram showing the way to adjust the amount of glass material (in a circle) and a deposition surface (in a trapezoid) in the prior art; and
Fig. 4 is an exemplary diagram showing variations in the amount of glass material (in a circle) and a deposition surface (in a trapezoid) in time series when two burners are used to deposit glass particles in the prior art.

### DESCRIPTION OF THE PREFFERED EMBODIMENTS

A glass rod onto which glass particles are deposited by the VAD method is made at pre-processing such that it has a core, but the glass rod does not always have a cladding. Next, the glass particles are deposited on the glass rod by the VAD method. Then, the soot preform is consolidated. A core diameter with respect to the outer diameter of the consolidated preform is determined, then. The ratio of the diameter of the consolidated preform to the diameter of the glass rod is generally set in range from 2 to 7. In other words, 75 - 95% of the whole glass particles are synthesized at the step of depositing the soot preform. Therefore, in view of the productivity of the soot preform, the deposition step is important. The deposition rate of the glass particles is dependent on the amount of the glass particles and the deposition efficiency on the deposition surface.

While the density of a silica glass is set at 2.2 g/cm³, the bulk density of the soot preform is set in a range from 0.2 g/cm³ to 0.7 g/cm³ and preferably from 0.2 g/cm³ to 0.4 g/cm³. This is because the soot preform becomes extremely easily broken at a low bulk density, whereas the soot preform is not effectively dehydrated at a high bulk density.

When the glass particles are deposited, in view of the bulk density, the outer diameter of the soot preform may normally set in range from 3.2 to 23 times, preferably from 4.1 to 23 times greater than that of the glass rod.

Glass particles have been deposited by using one burner according to the conventional VAD technique. In this case, the deposition rate of the soot preform is raised by increasing (i) an amount of glass particles to be deposited and (ii) the efficiency of deposition on the deposition surface of the glass rod or the soot preform.

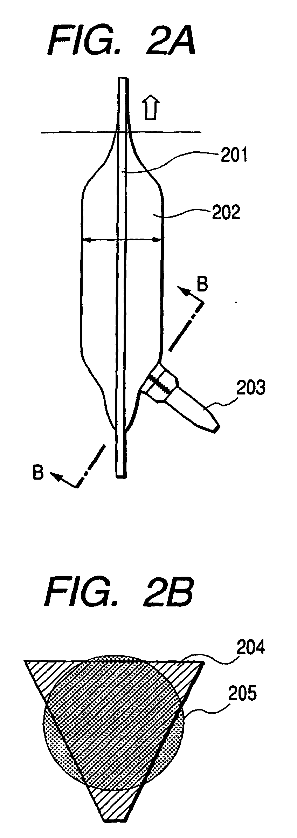

Fig. 2A is a schematic sectional view showing conditions in which one burner is used to deposit glass particles in the prior art. Referred to Fig. 2A, the soot preform 202 is synthesized on the periphery of the glass rod 201 by using a burner 203.

Fig. 2B a partial enlarged view showing an enlarged deposit portion to which the burner is directed. Fig. 2B shows the deposition surface 204 of soot preform as viewed from the burner and a circle 205 corresponding to an expanse of the glass particles formed by the reaction of the raw material gas spouted out of the burner on the deposition surface of the glass rod.

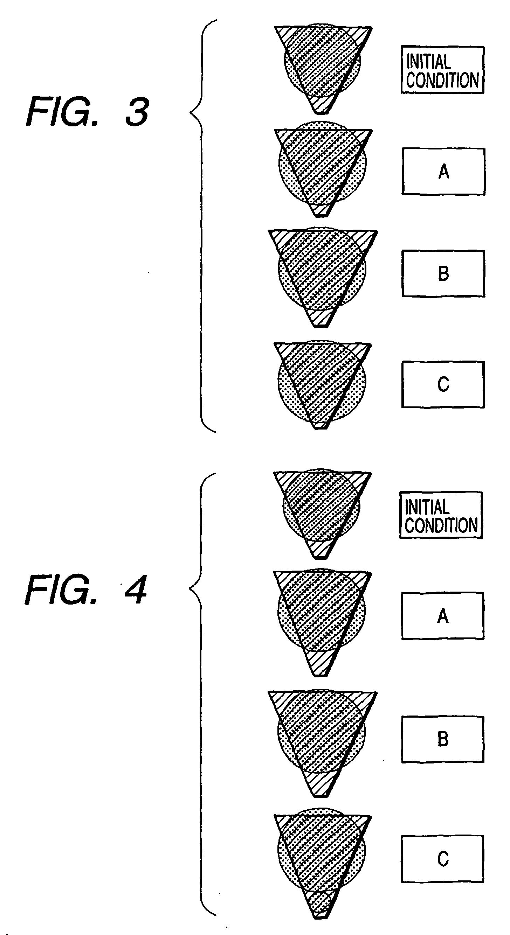

Fig. 3 shows a change of the amount of glass particles corresponding to the whole circular portion with respect to the condition adjustment in time series (initial condition → A → B → C). Fig. 3 also shows a change of variation of the deposition surface which is shown trapezoid in shape. When the input of raw material gas is increased as shown in the condition A from the initial condition to increase the amount of glass particles to be deposited, the diameter of the soot preform grows thick. As shown in the condition B and C, the relative position of the burner to the glass rod is adjusted so as to make the diameter of the soot preform constant, since the diameter of the soot preform with respect to the core diameter has to be set at a constant ratio. Consequently, though the deposition rate of the soot preform certainly increases, a ratio of a portion contributing to the deposited amount with respect to an expanse of the synthesized amount of glass particles becomes smaller. The portion contributing to the deposited amount is a portion overlapping the trapezoid with the circle in Fig. 3. And the expanse of the synthesized amount of the glass particles corresponding to the input amount of the raw material gas in Fig. 3 is the whole circular portion. Therefore, it is not preferable inviewof the yield rate of the glass particles.

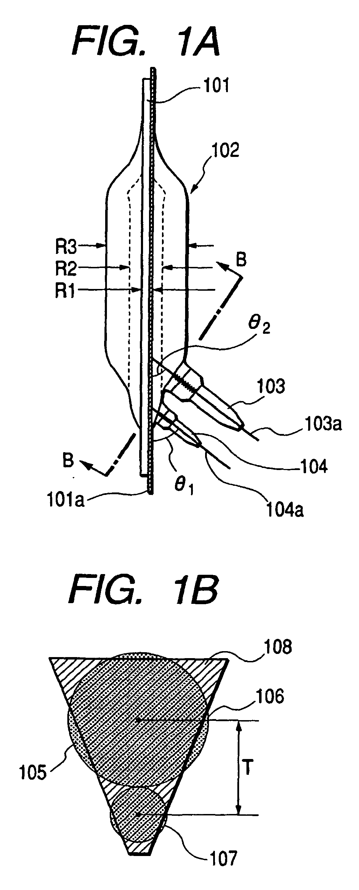

On the other hand, the efficiency of deposition is increased by enlarging the deposition surface. The deposition surface is enlarged by laying down the burners. In Fig. 1, the angle θ₁ and θ₂ is increasing according to laying down the burners. Fig. 4 shows conditions similar to those shown in Fig. 3. In the condition A, the deposition surface is enlarged by laying down the burner. In the condition B, the input amount of the raw material gas is increased, while the deposition surface is kept as large as that of the condition A.

Consequently, the deposition rate of the soot preform is increased. Owing to enlarging the deposition surface of the glass rod, however, flames for heating the interface of the soot preform become hard to reach the interface in comparison with the initial condition, and the temperature of the interface of the soot preform is decreasing, whereby the bulk density of the soot preform is lowered. Therefore, voids are generated in the interface of the glass rod when the soot preform is dehydrated and made transparent. This method is not preferable because of generating the voids. In order to suppress the generation of voids in the interface of soot preform, Japanese Patent Unexamined Publication Sho.63-248734 refers to "use of the primary burner for forming a porous glass layer having a diameter twice or smaller than the outer diameter of a high-purity glass rod" (see Fig. 4(C) in this reference).

Though the problem of the fine voids generated on the interface of the soot preform is solved by this method, the amount of the soot preformed by the primary burner is much less compared with the amount of the whole glass particles after consolidating.

Therefore, when the primary burner is used according to the above-mentioned prior art, the primary burner does not contribute to the improvement of the deposition rate of the soot preform directly. When we take an increase of the input of raw gas material generated by the primary burner into account, the ratio of the amount of deposited glass particles to the total amount of raw gas material is hardly raised. Therefore, the method is inefficient in view of the yield rate of the raw material gas.

In view of the below-described conditions, the ratio of the sectional area of the primary soot preform to the whole sectional area is 2.6%. And the ratio of the amount of the primary soot preform to the amount of the whole synthesized soot preform is 2.7%.

A bulk density of the glass particles deposited to the periphery of the glass rod: 0.3 g/cm³,

A ratio of the diameter of a preform after consolidation to the diameter of the glass rod: 4 times, and

A ratio of the diameter of the primary soot preform to the diameter of the glass rod is two times.

As described above, contribution to improving the deposition rate of the primary burner is scarcely seen.

On the other hand, the present invention is effective as a method for realizing a yield rate of the raw material while the above-mentioned problem is solved.

The method of the present invention is accomplished by the following conditions :
(i) 2 x R1 ≤ R2 ≤ 5 x R1
(ii) 1.5 ≤ (R3 - R2) / (R2 - R1) ≤ 7
wherein the diameter of the glass rod is R1, the diameter of the primary soot preform consisting of the glass particles formed by the primary burner is R2, the diameter of the secondary soot preform consisting of the glass particles formed by the secondary burner is R3, a thickness of the soot preform deposited by the secondary burner is "(R3-R2)/2", and a thickness of the primary soot preform formed by the primary burner is "(R2-R1)/2".

In Fig. 1A, the soot preform 102 is formed on the periphery of the glass rod 101 by using a secondary burner 103 and a primary burner 104. In the above-mentioned conditions, it is preferable that a thickness of the secondary soot preform is set in range from 2.5 times to 5 times of the thickness of the primary soot preform.

Referred to Fig. 1B, the large circle 106 shows the expanse of the glass particles formed by the secondary burner, in other words deposition area of the secondary burner. And, the small circle 107 shows the expanse of the amount of the glass particles formed by the primary burner, in other words deposition area of the primary burner. The trapezoid potion 108 shows the deposition surface of the soot preform in Fig. 1B. The portion actually contributing to the deposition of the glass particles by the primary and secondary burners is a portion which overlaps the large circle 106 and small circle 107 with the trapezoid portion 108. A portion 105, which does not overlap the large circle 106 and small circle 107 with the trapezoid portion 108, is corresponding to a waste amount of the glass particles. A distance T describes the distance between the center point of the large circle 106 and the center point of the small circle 107. Referred to the Fig. 1A, an angle θ₁ between the axis 104a of the primary burner and the axis 101a of the glass rod is preferably set in the range from 45 to 75 degrees. An angle θ₂ between the axis 103a of the secondary burner and the axis 101a of the glass rod is preferably set in the range from 45 to 75 degrees. Embodiments of the present invention are described in detail; however, the descriptions herein are not intended to limit the scope of the present invention.

### (Example 1)

A raw material gas (SiCl₄), H₂ and O₂ is used to deposit the glass particles under the following conditions of depositing the glass particles.
Burner: two coaxial multi tubular burners (the ratio between the diameters of the opening ends (secondary burner / primary burner) is 3.3.)
A diameter of the glass rod: 30 mm.
A diameter of the primary soot preform: 100 mm.
A diameter of the whole soot preform formed by the primary and secondary burners: 260 mm.
Distance T between the center points of the expanses of the glass particles deposited by the primary burner and secondary burner respectively: 200 mm.

The results are shown as follows:
Deposition rate of the soot preform formed by the primary and secondary burners: 31 g/min.
Growth rate of the soot preform formed by the primary and secondary burners: 95 mm/min.
Yield rate of the raw material gas: 55%.

### (Comparative Example 1)

Except that the following conditions are adopted, the glass particles are deposited under the same conditions in Example 1.
Burner: one coaxial multi-tubular burner (a burner angle of 60°, which is formed between the glass rod and the burner.)
A diameter of the soot preform: 260 mm.

The results are shown as follows:
Deposition rate of forming the soot preform: 22.0 g/min.
Growth rate of forming the soot preform: 85 mm/min.
Yield rate of the raw material gas: 50%.

The length of a "non-effective portion" at the termination end of forming the soot preform in Example 1 is 1.3 times greater than that in Comparative Example 1. Here, "non-effective portion" means a tapered potion in which the diameter of the soot preform is descending.

### (Comparative Example 2)

Except that the following conditions are adopted, glass particles are deposited under the same conditions in Example 1.
Burner: two coaxial multi tubular burners (the ratio between the diameters of the opening ends (secondary burner / primary burner) is 5.0)
A diameter of the primary soot preform: 50 mm.

The results are shown as follows:
Deposition rate of the soot preform by the primary and secondary burners: 22.3 g/min.
Growth rate of the soot preform by the primary and secondary burners: 85 mm/min.
Yield rate of the raw material gas: 42%.

### (Comparative Example 3)

Except that the following conditions are adopted, glass particles are deposited under the same conditions in Example 1.
Burner: two concentric multi tube burners (the ratio between the diameters of the opening ends (secondary burner / primary burner) is 2.0.)
A diameter of the primary soot preform: 150 mm.

The results are shown as follows:
Deposition rate of the soot preform by the primary and secondary burners: 30 g/min.
Growth rate of the soot preform by the primary and secondary burners: 90 mm/min.
Yield rate of the raw material gas: 44%.

### (Example 2)

Except that the following conditions are adopted, glass particles were deposited under the same conditions in Example 1.
Burner: two coaxial multi tubular burners (the ratio between the diameters of the opening ends (secondary burner / primary burner) is 3.3.)
Distance between center points, where the glass particles are deposited by the primary and secondary burners: 80 mm.

The results are shown as follows:
Deposition rate of the soot preform by the primary and secondary burners: 30 g/min.
Growth rate of the soot preform by the primary and secondary burners: 90 mm/min.
Yield rate of the raw material gas: 50%.

### (Example 3)

Except that a supply of the raw material gas supplied to the primary burner is stopped 30 minutes before estimated time when the formation of the soot preform is terminated, glass particles are deposited under the same conditions in Example 1.

As a result, while the deposition rate of the "effective portion" remains unchanged, the length of the non-effective portion at the termination end is reduced to the same length in Comparative Example 1. Here the "effective portion" means a portion in which the diameter of the soot preform is constant.

In forming the soot preform by the two-burners method, a high yield rate of the raw material gas and a high deposition rate of the soot preform is accomplished by the present invention.

## Claims

1. A method of forming a soot preform on the outer periphery of a glass rod comprising:
forming a primary soot preform on an outer periphery of the glass rod by a primary burner; and
forming a secondary soot preform by a secondary burner on an outer periphery of the primary soot preform,
wherein a diameter of the primary soot preform is set in from twice to five times of a diameter of the glass rod, and a thickness of the secondary soot preform is set in from 1.5 times to seven times of a thickness of the primary soot preform.

2. The method of forming the soot preform according to claim 1, wherein the thickness of the secondary soot preform is set in two times to five times of the thickness of the primary soot preform.

3. The method of forming the soot preform according to claim 1 or claim 2, wherein a diameter of an opening end of the secondary burner is greater than a diameter of an opening end of the primary burner.

4. The method of forming the soot preform according to claim 3, wherein the diameter of the opening end of the secondary burner is set in from two times to five times of that of the primary burner.

5. The method of forming the soot preform according to any one of claim 1 to claim 4, wherein an angle between the primary burner and the glass rod is ranged from 45 to 75 degree, and an angle between the secondary burner and the glass rod is ranged from 45 to 75 degree.

6. The method of forming the soot preform according to any one of claim 1 to claim 5, wherein a distance between a center point of expanse of the glass particles formed by the primary burner and a center point of expanse of the glass particles formed by the secondary burner is one third of or greater than the diameter of the soot preform formed by the primary and secondary burners.

7. The method of forming the soot preform according to any one of claim 1 to claim 6, further comprising:
stopping a supply of a raw material gas to the primary burner at a termination end of the soot preform before a supply of the raw material gas to the secondary burner is stopped.

## Patentansprüche

1. Verfahren zur Herstellung einer Preform aus Quarzruß an einem äußeren Umfang eines Glasstabs, umfassend:
Ausbilden einer ersten Quarzruß-Preform an einem äußeren Umfang eines Glasstabs mittels eines ersten Brenners; und
Ausbilden einer zweiten Quarzruß-Preform mittels eines zweiten Brenners an einem äußeren Umfang der ersten Quarzruß-Preform,
wobei ein Durchmesser der ersten Quarzruß-Preform auf einen Wert zwischen zwei- und fünfmal des Durchmessers des Glasstabs festgelegt wird und die Dicke der zweiten Quarzruß-Preform auf einen Wert zwischen 1,5- und 7-mal der Dicke der ersten Quarzruß-Preform festgelegt wird.

2. Verfahren zur Herstellung einer Quarzruß-Preform gemäß Anspruch 1, wobei die Dicke der zweiten Quarzruß-Preform auf einen Wert zwischen zwei- und fünfmal der Dicke der ersten Quarzruß-Preform festgelegt wird.

3. Verfahren zur Herstellung einer Quarzruß-Preform nach einem der Ansprüche 1 oder 2, wobei ein Durchmesser an einem Öffnungsende des zweiten Brenners größer ist als ein Durchmesser an einem Öffnungsende des ersten Brenners.

4. Verfahren zur Herstellung einer Quarzruß-Preform gemäß Anspruch 3, wobei der Durchmesser des Öffnungsendes des zweiten Brenners auf einen Wert zwischen zwei- und fünfmal dem des ersten Brenners festgelegt wird.

5. Verfahren zur Herstellung einer Quarzruß-Preform nach einem der Ansprüche 1 bis 4, wobei ein Winkel zwischen dem ersten Brenner und dem Glasstab zwischen 45 und 75 Grad liegt und ein Winkel zwischen dem zweiten Brenner und dem Glasstab zwischen 45 und 75 Grad liegt.

6. Verfahren zur Herstellung einer Quarzruß-Preform nach einem der Ansprüche 1 bis 5, wobei ein Abstand zwischen einem Flächenmittelpunkt der Glaspartikel, die durch den ersten Brenner gebildet werden, und einem Flächenmittelpunkt der Glaspartikel, die durch den zweiten Brenner gebildet werden, ein Drittel oder mehr des Durchmessers der Quarzruß-Preform beträgt, die durch den ersten und den zweiten Brenner gebildet wird.

7. Verfahren zur Herstellung einer Quarzruß-Preform nach einem der Ansprüche 1 bis 6, weiter umfassend:
Beenden einer Zufuhr an Rohmaterialgas zu dem ersten Brenner an einem Ablaufende der Quarzruß-Preform, bevor eine Zufuhr an Rohmaterialgas zu dem zweiten Brenner gestoppt wird.

## Revendications

1. Procédé de fabrication d'une préforme de suie sur la périphérie extérieure d'une tige de verre, comprenant :
la fabrication d'une préforme de suie primaire sur une périphérie extérieure de la tige de verre en employant un brûleur principal ; et
la fabrication d'une préforme de suie secondaire en employant un brûleur secondaire sur une périphérie extérieure de la préforme de suie primaire,
dans lequel un diamètre de la préforme de suie primaire est établi pour correspondre à deux à cinq fois un diamètre de la tige de verre, et une épaisseur de la préforme de suie secondaire est établie pour correspondre à une et demi à cinq fois une épaisseur de la préforme de suie primaire.

2. Procédé de fabrication de la préforme de suie selon la revendication 1, dans lequel l'épaisseur de la préforme de suie secondaire est établie pour correspondre à deux à cinq fois l'épaisseur de la préforme de suie primaire.

3. Procédé de fabrication de la préforme de suie selon la revendication 1 ou la revendication 2, dans lequel un diamètre d'une extrémité d'ouverture du brûleur secondaire est plus grand qu'un diamètre d'une extrémité d'ouverture du brûleur primaire.

4. Procédé de fabrication de la préforme de suie selon la revendication 3, dans lequel le diamètre de l'extrémité d'ouverture du brûleur secondaire est établi pour correspondre à deux à cinq fois celui du brûleur primaire.

5. Procédé de fabrication de la préforme de suie selon l'une quelconque de la revendication 1 à la revendication 4, dans lequel un angle entre le brûleur primaire et la tige de verre est compris dans la gamme allant de 45 à 75 degrés, et un angle entre le brûleur secondaire et la tige de verre est compris dans la gamme allant de 45 à 75 degrés.

6. Procédé de fabrication de la préforme de suie selon l'une quelconque de la revendication 1 à la revendication 5, dans lequel une distance entre un point central de l'étendue des particules de verres formées par le brûleur primaire et un point central de l'étendue des particules de verre formées par le brûleur secondaire correspond à un tiers du ou est plus grande que le diamètre de la préforme de suie formée par les brûleur primaire et secondaire.

7. Procédé de fabrication de la préforme de suie selon l'une quelconque de la revendication 1 à la revendication 6, comprenant en outre :
l'arrêt de la fourniture d'un gaz de matière première au brûleur primaire à une extrémité finale de la préforme de suie avant qu'une fourniture du gaz de matière première au brûleur secondaire soit arrêtée.
